# EUROPEAN PATENT APPLICATION

(11) **EP 2 159 892 A2**
(43) Date of publication of application: **03.03.2010**
(21) Application number: 09164505.1
(22) Date of filing: 03.07.2009
(51) Int. Cl.: H02G 3/10, H02G 3/16

(54) **Adjustable mounting bracket and a distribution box having the same**

(30) Priority: 28.08.2008 CN 200810211156
(71) Applicant: SIEMENS AKTIENGESELLSCHAFT, 80333 München (DE)
(72) Inventor: Bao, Zhang Yao, 201514, Shanghai (CN); Wu, Hong Feng, 201514, Shanghai (CN)

(57) **Abstract**

The present invention proposes an adjustable mounting bracket, which comprises one pair of supporting structures mounted symmetrically and a bracket body with its two ends disposed on the pair of supporting structures respectively; wherein, each of said supporting structures comprises a fixing plate mounted fixedly, an adjustment member mounted in said fixing plate and being adjustable in height relative to said fixing plate, and a moving plate which bears against said adjustment member and moves along with them; and the two ends of said bracket body are mounted on said moving plates respectively. Correspondingly, the present invention further proposes a distribution box having the above adjustable mounting bracket. By way of the adjustable mounting bracket of the present invention, components mounted on said mounting bracket can be moved to proper positions, thereby solving the potential problem that the components cannot be arranged flush with the front cover of the distribution box.

## Description

### Technical field

The present invention relates to a distribution box and, particularly, to a mounting bracket for a distribution box and a distribution box having such a mounting bracket.

### Background art

During the installation of a concealed type distribution box, there is always an issue of making the components therein flush with the front cover of the distribution box. Since the mounting bracket for mounting the components in a conventional distribution box is fixed and therefore non-adjustable, when there is an offset such as some errors in the reserved small embedding depth, there will occur the problem that the components mounted on the mounting bracket exceed the base box and thus cannot be flush with the front cover of the distribution box.

There is disclosed in Chinese patent application no. 03230416.1 a multifunctional household distribution box, which can ensure that the installation of a front cover is only relevant with a wall plane, without requiring an accurate size of the depth of an pre-embedded base box, and this provides convenience for the installation of a household distribution box and solves the problem of requiring the adjustment of the mounting depth for distribution switches.

There is disclosed in Chinese patent application no. 02107214.0 a plug-connection adjustable distribution box, with the parts thereof being assembled and plug-connected quickly and flexibly, and the movement, opening, installation and maintenance of the component board being convenient.

However, the issue of keeping the components mounted on a mounting bracket flush with the front cover of a distribution box is not fully solved in the abovementioned prior art, and the structures thereof are relatively complicated.

### Contents of the invention

In view of the situation, an object of the present invention is to provide an adjustable mounting bracket with a simple structure, so as to solve the problem in keeping the components mounted on the mounting bracket flush with the front cover of a distribution box.

Another object of the present invention is to provide a distribution box with said adjustable mounting bracket.

In order to realize the above objects, there is proposed in the present invention an adjustable mounting bracket, which comprises one pair of supporting structures mounted symmetrically and a bracket body with its two ends being set on the pair of supporting structures respectively; wherein, each said supporting structures comprises a fixed plate, an adjustment member mounted in said fixed plate and being adjustable in height relative to said fixed plate, and a moving plate which bears against said adjustment member and moves along with it; and two ends of said bracket body are mounted respectively on said moving plates.

According to one aspect of the present invention, said fixed plate is of an angled plate structure, comprising a vertical part and a horizontal part that are substantially perpendicular to each other; a position-limiting hole is provided in said vertical part; and a screw hole is provided in said horizontal part.

According to one aspect of the present invention, said adjustment member is an adjusting screw, said adjusting screw is mounted in the screw hole of the horizontal part of said fixed plate, and by rotating said adjusting screws its height relative to said fixed plate is adjustable.

According to one aspect of the present invention, said adjusting screw has a flange.

According to one aspect of the present invention, said moving plate comprises a horizontal free end having a through-hole provided therein, and said horizontal free end is fitted around one end of said adjusting screw through the through-hole and bears against the flange of said adjusting screw.

According to one aspect of the present invention, the diameter of said through-hole is less than the diameter of the flange of said adjusting screw but greater than the diameter of the remaining part of said adjusting screw.

According to one aspect of the present invention, the terminal end of the horizontal free end of said moving plate has a protruding tongue, and said tongue extends into the position-limiting hole of said fixing plate.

According to one aspect of the present invention, the position-limiting hole of said fixed plate is a rectangular through-hole.

According to one aspect of the present invention, said moving plate further comprises another horizontal free end provided with a recess, said recess is positioned opposite to said through-hole, and the other end of said adjusting screw is located in said recess.

Correspondingly, the present invention further proposes a distribution box with the abovementioned adjustable mounting bracket.

Therefore, by way of the adjustable mounting bracket of the present invention, the components mounted on said mounting bracket can be moved to suitable positions, thereby solving a possible problem that the components cannot be made flush with the front cover of the distribution box.

### Description of the drawings

Fig. 1 is a schematic diagram of an adjustable mounting bracket according to the present invention disposed in a distribution box;
Fig. 2 is a schematic structural diagram of the adjustable mounting bracket according to the present invention;
Fig. 3 is a schematic structural diagram at a different angle of the adjustable mounting bracket according to the present invention;
Fig. 4 is a schematic diagram of a supporting structure of the adjustable mounting bracket according to the present invention;
Fig. 5 is a schematic diagram at a different angle of the assembling relationship of the supporting structure of the adjustable mounting bracket according to the present invention; and
Fig. 6 is a schematic diagram of a particular application embodiment of the adjustable mounting bracket according to the present invention.

### Particular embodiments

Hereinbelow, the present invention will be explained in detail in combination with the drawings. In the following text, the adjustable mounting bracket of the present invention is described by taking the application in a concealed distribution box as an example; however, those skilled in the art should understand that the adjustable mounting bracket of the present invention can equally be applied in other types of distribution boxes.

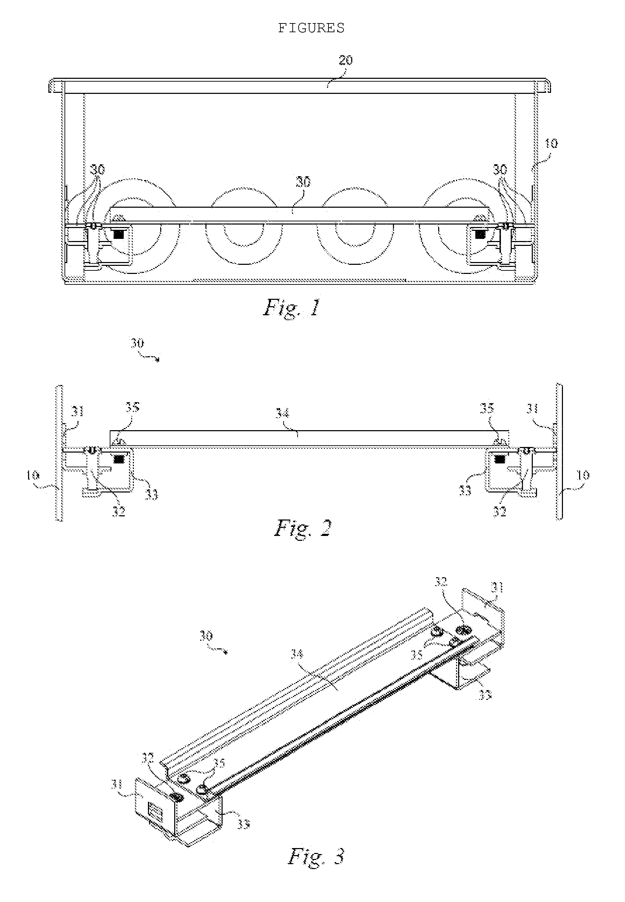

Referring to Fig. 1, the concealed distribution box includes a base box 10, a mounting bracket 30 disposed in said base box 10 for mounting components thereon, and a front cover 20 that covers an open end of said base box 10.

Referring to Figs. 2 and 3, the two figures show views respectively at different angles of the adjustable mounting bracket 30 of the present invention. Said mounting bracket 30 comprises one pair of supporting structures mounted symmetrically on side walls of said base box 10, with each said supporting structure including a fixed plate 31, an adjustment member 32 and a moving plate 33, and a bracket body 34 with its two ends being set on the pair of supporting structures respectively. Since said pair of supporting structures is mounted symmetrically, for the sake of clarity and simplicity, only one supporting structure thereof at one side is described in detail as an example, and those skilled in the art can understand that the supporting structure at the other side also has the corresponding features.

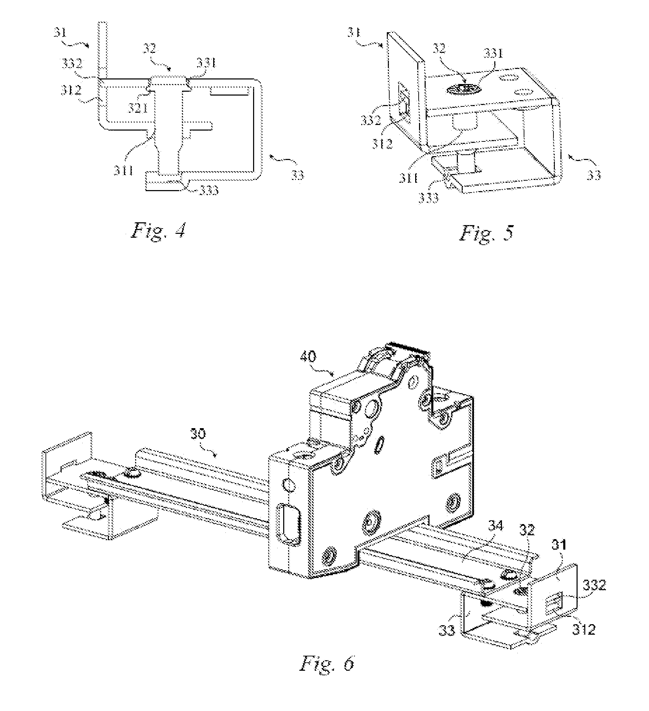

Referring to Figs. 4 and 5 at the same time, the two figures show views respectively at different angles of the supporting structure of the adjustable mounting bracket of the present invention.

Said supporting structure comprises a fixed plate 31, an adjustment member 32 and a moving plate 33 which interact with one another.

Said fixed plate 31 is of an angled plate structure, roughly in an L shape, which comprises a vertical part and a horizontal part that are substantially perpendicular to each other; a position-limiting hole 312 is provided in said vertical part, and preferably, said position-limiting hole 312 is a rectangular through-hole; and a screw hole 311 is provided in said horizontal part. Said fixed plate 31 is disposed fixedly on a side wall of said base box 10 by its vertical part, and preferably, the vertical part of said fixed plate 31 is welded onto a side wall of the base box 10 of said distribution box, and those skilled in the art can understand that the vertical part of said fixed plate 31 can also be disposed fixedly on the side wall of the base box 10 of said distribution box by way of other fixing means such as screw fixing, riveted fixing, snap-fit fixing, etc.

Said adjustment member is preferably an adjusting screw 32, the adjusting screw 32 is mounted in the screw hole 311 of the horizontal part of said fixed plate 31, and by rotating said adjusting screw 32 its height relative to said fixed plate 31 is adjustable. Said adjusting screw 32 has a flange 321, and preferably, said flange 321 is of a circle structure disposed around the periphery of said adjusting screw 32. Those skilled in the art can understand that said adjustment member can also be of other equivalent structures such as an adjusting rod, etc.

Said moving plate 33 is of a substantially U-shaped structure, which comprises two horizontal free ends and a vertical enclosed end; a through-hole 331 is disposed in one of said two horizontal free ends, and preferably the terminal end of the horizontal free end has a protruding tongue 332, wherein the diameter of said through-hole 331 is less than the diameter of the flange 321 of said adjusting screw 32 but larger than the diameters of other parts of said adjusting screw 32, and the width of said tongue 332 is less than the width of the position-limiting hole 312 of said fixed plate 31; a recess 333 is provided preferably on the other one of said two free ends in a position opposite to said through-hole 331, and said recess 333 can be formed by stamping. Said moving plate 33 is disposed in a way that the opening formed by its two horizontal free ends is oriented towards said fixed plate 31; the through-hole 331 of said moving plate 33 is fitted around one end of said adjusting screw 32, and since the diameter of the through-hole 331 of said moving plate 33 is less than the diameter of the flange 321 of said adjusting screw 32, said moving plate 33 bears against the flange 321 of said adjusting screw 32 through the through-hole 331, while the other end of said adjusting screw 32 is located in the recess 333 of said moving plate 33; and the tongue 332 of said moving plate 33 extends into the position-limiting hole 312 of said fixed plate 31.

The two ends of said bracket body 34 are respectively set on the pair of supporting structures, and specifically the two ends of said bracket body 34 are fixed on said moving plates 33 respectively by screws 35.

Since said moving plate 33 bears against the flange 321 of said adjusting screw 32, said moving plate 33 moves along with the movement of said adjusting screw when said adjusting screw 32 is rotated for adjusting its height relative to said fixed plate 31; since said bracket body 34 is fixed on said moving plate 33, said bracket body 34 moves along with the movement of said moving plate 33; and therefore, the distance of the bracket body 34 relative to the front cover 20 of said distribution box can be adjusted by adjusting the height of said adjusting screw 32 relative to said fixed plate 31. Since the tongue 332 of said moving plate 33 extends into the position-limiting hole 312 of said fixed plate 31, when said adjusting screw 32 is adjusted to drive said moving plate 33 to move to said tongue 332 and bears against the edge of said position-limiting hole 312, said moving plate 33 is stopped, and said adjusting screw 32 cannot be further adjusted at that time. Therefore, the adjustable range in height by said adjusting screw 32 relative to said fixed plate 31 is determined by the height of the position-limiting hole 312 of said fixed plate 31. Furthermore, since one end of said adjusting screw 32 is located in the recess 333 of said moving plate 33, this can prevent the positional offset of said adjusting screw 32 from occurring during the adjustment.

Referring to Fig. 6, the figure shows a particular application embodiment of the adjustable mounting bracket of the present invention, wherein a component 40 is disposed on the bracket body 34 of said mounting bracket 30, and by adjusting the height of said adjusting screws 32 relative to said fixed plate 31, it brings said moving plate 33 to move, so as to bring said bracket body 34 to move and in turn it brings said component 40 to move, thus adjusting the distance of said component 40 relative to the front cover 20 of said distribution box.

Correspondingly, the present invention further proposes a distribution box, which comprises a base box 10 and a front cover 20 that covers an open end of said base box 10, and further comprises an adjustable mounting bracket mentioned above for mounting the components thereon, wherein the fixed plates 31 of said adjustable mounting bracket are disposed fixedly on side walls of said base box 10.

What are described above are merely preferred embodiments of the present invention, and are not to limit the present invention; any modification, equivalent replacement and improvement within the spirit and principle of the present invention should be included in the protective scope of the present invention.

## Claims

1. An adjustable mounting bracket, **characterized in that** it comprises one pair of supporting structures mounted symmetrically and a bracket body (34) with its two ends disposed on the pair of supporting structures respectively; wherein, each said supporting structure comprises a fixing plate (31), an adjustment member (32) mounted in said fixing plate (31) and being adjustable in height relative to said fixing plate (31), and a moving plate (33) which bears against said adjustment member (32) and moves along with them; and the two ends of said bracket body (34) are mounted on said moving plates (33) respectively.

2. The adjustable mounting bracket as claimed in claim 1, **characterized in that** said fixing plate (31) is of an angled plate structure, comprising a vertical part and a horizontal part that are substantially perpendicular to each other; a position-limiting hole (312) is provided in said vertical part; and a screw hole (311) is provided in said horizontal part.

3. The adjustable mounting bracket as claimed in claim 2, **characterized in that** said adjustment member is an adjusting screw (32), said adjusting screw (32) is mounted in the screw hole (311) of the horizontal part of said fixing plate (31), and its height relative to said fixing plate (31) is adjustable by rotating said adjusting screw (32).

4. The adjustable mounting bracket as claimed in claim 3, **characterized in that** said adjusting screw (32) has a flange (321).

5. The adjustable mounting bracket as claimed in claim 4, **characterized in that** said moving plate (33) comprises a horizontal free end provided with a through-hole (331), and said horizontal free end is fitted around one end of said adjusting screw (32) through the through-hole (331) and bears against the flange (321) of said adjusting screw (32).

6. The adjustable mounting bracket as claimed in claim 5, **characterized in that** the diameter of said through-hole (331) is smaller than the diameter of the flange (321) of said adjusting screw (32) and is bigger than the diameter of the remaining parts of said adjusting screw (32).

7. The adjustable mounting bracket as claimed in claim 5, **characterized in that** the terminal end of the horizontal free end of said moving plate (33) has a protruding tongue (332), and said tongue (332) extends into the position-limiting hole (312) of said fixing plate (31).

8. The adjustable mounting bracket as claimed in claim 7, **characterized in that** the position-limiting hole (312) of said fixing plate (31) is a rectangular through-hole.

9. The adjustable mounting bracket as claimed in claim 5, **characterized in that** said moving plate (33) further comprises another horizontal free end provided with a recess (333), said recess (333) is positioned opposite to said through-hole (331), and the other end of said adjusting screw (32) is located in said recess (333).

10. A distribution box, comprising a base box (10) and a front cover (20) which covers an open side of said base box (10), **characterized in that** it further comprises an adjustable mounting bracket as claimed in any one of the preceding claims, for mounting components thereon, wherein the fixing plates (31) of said adjustable mounting bracket are disposed fixedly on side walls of said base box (10).
